(19) **Europäisches Patentamt / European Patent Office / Office européen des brevets**

(11) **EP 1 817 914 B1**

(12) **EUROPEAN PATENT SPECIFICATION**

(45) Date of publication and mention of the grant of the patent:
**07.02.2018 Bulletin 2018/06**

(21) Application number: **05813402.4**

(22) Date of filing: **02.12.2005**

(51) Int Cl.:
*H04N 19/33* (2014.01)    *H04N 19/463* (2014.01)
*H04N 19/51* (2014.01)    *H04N 19/513* (2014.01)
*H04N 19/59* (2014.01)    *H04N 19/63* (2014.01)
*H04N 19/17* (2014.01)    *H04N 19/187* (2014.01)
*H04N 19/70* (2014.01)

(86) International application number:
**PCT/EP2005/056451**

(87) International publication number:
**WO 2006/058921 (08.06.2006 Gazette 2006/23)**

(54) **METHOD FOR SCALABLE VIDEO CODING**

VERFAHREN ZUR SKALIERBAREN VIDEOKODIERUNG

PROCEDE DE CODAGE VIDEO SCALABLE

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.12.2004 FR 0452865**
**18.02.2005 EP 05101224**

(43) Date of publication of application:
**15.08.2007 Bulletin 2007/33**

(73) Proprietor: **Thomson Licensing**
**92130 Issy-les-Moulineaux (FR)**

(72) Inventors:
• **MARQUANT, Gwenaelle**
  **F-35340 Liffré (FR)**
• **BURDIN, Nicolas**
  **F-35700 Rennes (FR)**
• **LOPEZ, Patrick**
  **F-35450 Livré sur Changeon (FR)**
• **FRANCOIS, Edouard**
  **F-35890 Bourg des Comptes (FR)**
• **BOISSON, Guillaume**
  **F-35000 Rennes (FR)**

(74) Representative: **Huchet, Anne et al**
**TECHNICOLOR**
**1-5, rue Jeanne d'Arc**
**92130 Issy-les-Moulineaux (FR)**

(56) References cited:
| | |
|---|---|
| **EP-A- 0 485 230** | **EP-A- 1 322 121** |
| **WO-A-01/77871** | **WO-A-2004/073312** |
| **US-A1- 2002 001 411** | **US-A1- 2002 154 697** |

• REICHEL J ET AL: "Scalable Video Model 3.0" ISO/IEC JTC1/SC29/WG11 N6716, XX, XX, October 2004 (2004-10), pages 1-85, XP002341767
• WIEGAND T: "JOINT MODEL NUMBER 1, REVISION 1(JM-IRL)" ITU STUDY GROUP 16 - VIDEO CODING EXPERTS GROUP, 3 December 2001 (2001-12-03), pages 1,3-75, XP001086627
• WAN W K ET AL: "Adaptive format conversion for video scalability at low enhancement bitrates" PROCEEDINGS OF THE 44TH. IEEE 2001 MIDWEST SYMPOSIUM ON CIRCUITS AND SYSTEMS. MWSCAS 2001. DAYTON, OH, AUG. 14 - 17, 2001, MIDWEST SYMPOSIUM ON CIRCUITS AND SYSTEMS, NEW YORK, NY : IEEE, US, vol. VOL. 1 OF 2, 14 August 2001 (2001-08-14), pages 588-592, XP010579270 ISBN: 0-7803-7150-X
• FRANCOIS E ET AL: "Extended spatial scalability", 71. MPEG MEETING; 17-01-2005 - 21-01-2005; HONG KONG; (MOTION PICTUREEXPERT GROUP OR ISO/IEC JTC1/SC29/WG11),, no. M11669, 12 January 2005 (2005-01-12), XP030040414, ISSN: 0000-0250

**Description**

The invention relates to a method for scalable video coding and decoding of high resolution images from images with lower resolution, more specifically a method for inheriting coding data from images with lower resolution in order to code and decode high resolution images.

It also relates to a video sequence bitstream generation. Said coded bitstream is constituted of encoded video data in which each data item is described by means of a bitstream syntax allowing to recognize and decode all the elements of the content of said bitstream.

The domain is the video compression complying, for instance, with the video coding standards of the MPEG family such as MPEG-1, MPEG-2, MPEG-4 and the recommendations of the ITU-H. 26X family (H. 261, H. 263 and extensions, H. 264).

Video coders with spatial scalability are a known field. The data stream generated by the video coder has a scalable hierarchy; the coded data is incorporated into the stream in a hierarchical manner, with spatial scalability. The video formats to which these coders relate are those for which the dimensions of the high resolution correspond to a multiple of 2 of those of the low resolution allowing a dyadic decomposition. Thus, a coding compatible with a Quarter Common Intermediate Format, or QCIF, and of dimensions 176 x 144 and with a CIF format, of dimensions 352 x 288, or else a coding compatible with a CIF format and with a 4 CIF format, of dimensions 704 x 576, can be obtained by under-sampling and filtering of the high-resolution image.

The hierarchical coding allows to obtain a base layer relating to the low-resolution format and an upper layer that corresponds to the higher-resolution format. The complementary data relating to the upper layer are generally calculated according to a method comprising the following steps:

- coding of the low-resolution image and local decoding of this coded image in order to obtain a reconstructed image,
- rescaling or zoom of the reconstructed low-resolution image, for example by interpolation and filtering, in order to obtain an image in high-resolution format,
- pixel-to-pixel difference of the luminance values of the source image and of a prediction image based on the reconstructed image in order to obtain residues forming the data of the upper layer.

The method is also applied to the chrominance images if they exist. In simplified versions, the reconstructed image is directly the original low-resolution image.

Thus, the coding of the high-resolution image exploits the low-resolution image rescaled as a prediction image.

The last step exploits a coding mode called default inter-layer mode using the macroblock of the zoomed image overlaid on the current macroblock of the high-resolution image to be coded, as prediction macroblock. This mode corresponds to the inter-layer mode with a zero motion vector. It is referred to as default because no motion vector is transmitted, the current macroblock using motion vectors derived from those of its prediction macroblock. This coding mode can only be exploited in the case where the images can be overlaid. If the high-resolution format is not linked to the low-resolution format by a dyadic transformation, the macroblocks cannot be overlaid and the default inter-layer coding mode cannot be used.

The available coding modes do not therefore allow the cost of coding the high-resolution image to be optimized, in particular when the image resolutions or formats are not proportional.

The invention addresses the spatial scalability issue and also proposes additional syntax for the MPEG 4 part 10 or H264. The Scalable Video Model relating to this standard, known as SVM, only addresses dyadic spatial scalability, that is, configurations where the factor between pictures width and height of two successive (high to low) spatial layers (or resolutions) equals 2.

In SVM3,0, Scalable Video Model version described in document "Scalable Video Model 3.0", ISO/IEC JTC 1/SC 29/WG 11 N6716, J.Reichel, M.Wien, H.Schwarz, an approach for inter-layer prediction of motion and texture data is proposed. The approach is limited to case where the low layer resolution has half width and height of the high layer resolution.

One of the aim of the invention is to overcome the aforementioned drawbacks.

The subject of the invention is a method for inheriting coding data, for a first image (F1) in the format F1, from coding data of a second image (F2) in the format F2 of lower resolution than the first format F1, the video content of the first and second images (F1) and (F2) having at least one common part, the first image and the second image being partitioned respectively into HR blocks and BR blocks, a coding mode and motion data having been calculated and attributed to BR blocks of the second image (F2) for their coding/decoding, characterized in that the following steps are implemented:

- superimposition, after zooming and for the common part, of the second image in the format F2 onto the first image in the format F1

- determination of the number of zoomed BR blocks covering the said HR block,
- if this number equals 1, assignment of the mode and motion data of the zoomed BR block to this HR image block,
- if this number is greater than 1, assignment of a mode and of motion data as a function of the modes and the motion data of the zoomed BR blocks covering this HR block,
- merging neighbouring HR blocks depending on the similarity of the motion data and/or of the coding modes assigned to the HR blocks and assigning of the coding modes and motion data to the new blocks according to the coding modes and motion data of the merged blocks.

According to one particular amendment of the method, the first image is split into macroblocks made up of a predetermined number of HR blocks and the step of merging is implemented on HR blocks of a same macroblock.

According to one particular amendment of the method, the second image in the format F2 is partitioned into macroblocks, a macroblock is partitioned into sub-macroblocks, which are themselves subdivided into blocks according to the coding modes chosen for the macroblock, a BR block corresponding, for each macroblock, to a macroblock, a sub-macroblock or a block, depending on the partition of the macroblock.

According to one particular amendment of the method, the size of a HR block corresponds to the size of a block making up a sub-macroblock in the MPEG4 standard.

According to one particular amendment of the method, if the number is greater than one, the coding mode assigned to the HR block is the majority or predominant mode.

According to one particular amendment, the motion data are at least a motion vector and the motion vector assigned to the HR block is chosen from amongst the candidate motion vectors corresponding to the zoomed BR blocks covering the block and having the assigned coding mode.

According to one particular amendment of the method, the images are sub-band images obtained by temporal decomposition of the wavelet type or sub-band coding of the source images.

According to one particular amendment of the method, the BR blocks covering a HR block are determined by selecting the BR blocks colocated to the pixels corresponding to each corner of the HR block.

According to one particular amendment of the method motion data are the picture reference indexes and corresponding motion vectors as defined in H264 standard.

According to one particular amendment, when several reference indexes exist for a list, the one selected for the block is the minimum and, when several motion vectors exist for the selected reference index, the assigned motion vector corresponds to their mean value.

The invention also relates to a method for scalable coding of images with a F1 format corresponding to an enhanced layer and with a F2 format having a lower resolution than F1, corresponding to a base layer, characterised in that it implements a method for inheriting coding data according to the previous method and in that it further implements a step of coding blocks or merged blocks according to the assigned coding mode and motion data.

The invention also relates to a method for decoding data of images with a F1 format corresponding to an enhanced layer and a F2 format having a lower resolution than F1, corresponding to a base layer, characterised in that it implements a method for inheriting coding data according to the previous method and in that it further implements a step of decoding blocks or merged blocks according to the assigned coding mode and motion data.

The default inter-layer predictive coding mode consists in exploiting sub-macroblocks and/or blocks making up macroblocks of the rescaled low-resolution image, overlaying HR blocks of the high-resolution image, for the coding of these HR blocks or of macroblocks formed from these blocks.

This default coding mode allows the inter-layer redundancy to be exploited efficiently and the total cost of coding to thus be reduced. An improved ratio image quality / coding cost can be obtained by way of this additional coding mode. A further advantage is that it allows correlation calculations that are costly in terms of processing time or calculating power to be avoided.

The invention allows to extend the inter-layer prediction to generic cases where low layer and high layer pictures dimensions are not multiple of 2. New syntax elements are added to deal with generic cases when non dyadic spatial scalability appears, allowing efficient encoding/decoding of the macroblocks of the enhancement or high layer knowing the decoded base layer or low layer.

A new tool is proposed, providing extended spatial scalability, that is, managing configurations where:

- the factor between pictures width and height of two successive (high to low) spatial layers (or resolutions) does not necessarily equal 2;
- pictures of the higher level of resolution can contain parts (picture borders) that are not present in corresponding pictures of the low level of resolution.

Other features and advantages of the invention will become clearly apparent in the following description, presented by way of non-limiting example and with regard to the appended figures, which show:

- Figure 1, a flow diagram of the coding method,
- Figure 2, a representation of the formats to be coded,
- Figure 3, an illustration of the coding modes of a macroblock,
- Figure 4, an overlay of the macroblocks of a high-resolution and low-resolution image,
- Figure 5, a macroblock of the high-resolution image,
- Figure 6, a flow diagram of the inter-layer coding method,
- Figure 7, a flow diagram of the process for selection of the coding mode and of the motion vectors of an HR block,
- Figure 8, an illustration of the steps of the method,
- Figure 9, examples of the assignment of the coding modes and motion vectors to the HR blocks.
- Figure 10, relations between enhancement layer and base layer,
- Figure 11, macroblock overlapping between upsampled base layer picture and enhancement layer picture,
- Figure 12, authorized blocks for inter layer motion vector prediction,
- Figure 13, pixels of a 4x4 block b,
- Figure 14, 4x4 blocks b of a 8x8 block B
- Figure 15, 8x8 blocks B of a prediction macroblock,
- Figure 16, authorized blocks for inter layer texture prediction,
- Figure 17, co-located base layer macroblocks and 8x8 blocks of a macrobloc MB.

The method for coding the data is a hierarchical coding method, in other words the stream of coded data is structured in a hierarchical manner, the data relating to the lowest-resolution format being integrated into a base layer or lower layer, the complementary data relating to the higher-resolution format being integrated into an upper layer. Selecting only the data relating to one standard or one format, from within the data stream, is thus facilitated by selecting only the layers corresponding to the desired resolution level. Here, this corresponds to spatial scalability, compatible with any temporal scalability demanded by the standard relating to the resolution format.

The invention relates to the coding of video contents with different formats, which contents could be different but have at least one video part in common. It is particularly adapted to the formats that are non-proportional in width and/or height of the image. One of the formats is of lower resolution than the other format. It is either of lower definition with the number of pixels per row or the number of rows defining, for example, the common video part, being lower, or, for a same definition, of smaller size.

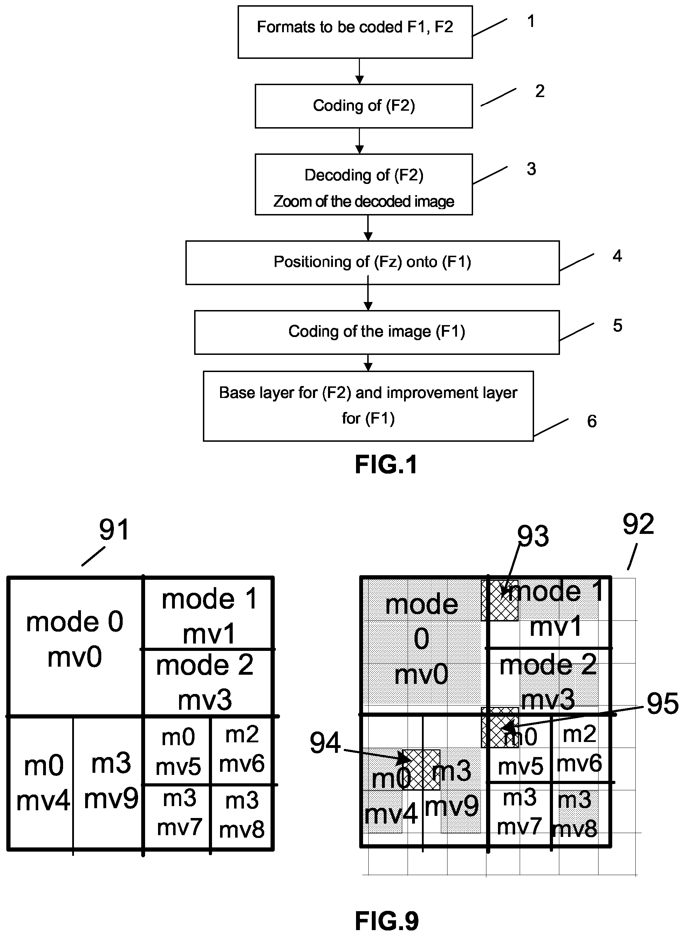

Figure 1 shows a flow diagram of the coding method according to the invention.

A first step 1 takes the various video formats to be coded into account. The stream of coded data obtained at the output of the coder supplies decoders compatible with one of these formats, the selection of the format, dependent on the display device, on the decoder or on parameters such as the transmission rate, being made by filtering the data from this stream of coded data, upstream of or within the decoder.

In the example described, a first high-resolution format F1 and a second low-resolution format F2 are used. Each of these formats is defined by its width LF1, LF2 or number of pixels in a row and its height HF1, HF2 or number of rows.

It is considered that the video sources supplying the coder are in the F1 and F2 formats. These correspond, possibly for only one part, to the same video content. For only one part means that the video content of these two sources is then different, in other words that a simple homothetic transformation from one format to the other is not possible or, put another way, that the formats are not proportional.

Geometric parameters, allowing the video part common to the two formats to be defined, are also transmitted to the coder.

The creation of these source images and the calculation of the geometric parameters may, for example, be effected in the following manner:

Starting from the chosen formats, a first and a second video window are dimensioned and positioned within an original image in order to define the video contents of this image to be coded in each of the formats. It is assumed that these two windows overlap at least partially. They define the video contents to be coded in the F1 format and in the F2 format. The dimensions of these first and second windows are chosen to be homothetic with the F1 and F2 formats, respectively.

The high- and low-resolution source images transmitted to the coder may have the same definition as the original image or different definitions from that of the original image or from one another, depending on whether they undergo filtering and sampling operations or not. The high-resolution image, called (F1), is chosen as reference image in order to define the geometric parameters. These are, for example, the position of the image (F2) with F2 format within the image (F1) and the definition ratio which corresponds to the zoom to be applied to the image (F2) in order to make the video content of (F2) correspond to the video content of (F1) for the common part.

Step 2 performs a coding of the video image in the F2 format.

Step 3 performs the decoding of this coded image in order to supply a local decoded image or reconstructed image. In one simplified version, the local decoded image may consist of the original image before coding, in other words of the source image (F2). This image is then rescaled or zoomed, by a ratio corresponding to the geometric parameter relating to the definition ratio, in order to obtain a zoomed image (F2), called (Fz).

The following step 4 performs the positioning of the image (Fz) on the high-resolution image (F1) as a function of the geometric parameter relating to the position, so as to make the video contents correspond.

The next step 5 performs the coding of the high-resolution image. This coding takes into account various coding modes, of which the inter-layer coding, which is the subject of the invention, is explained below.

Step 6 inserts the coding data relating to the image (F2) into a base layer of the data stream and the coding data specific to the high-resolution image (F1) into an upper layer.

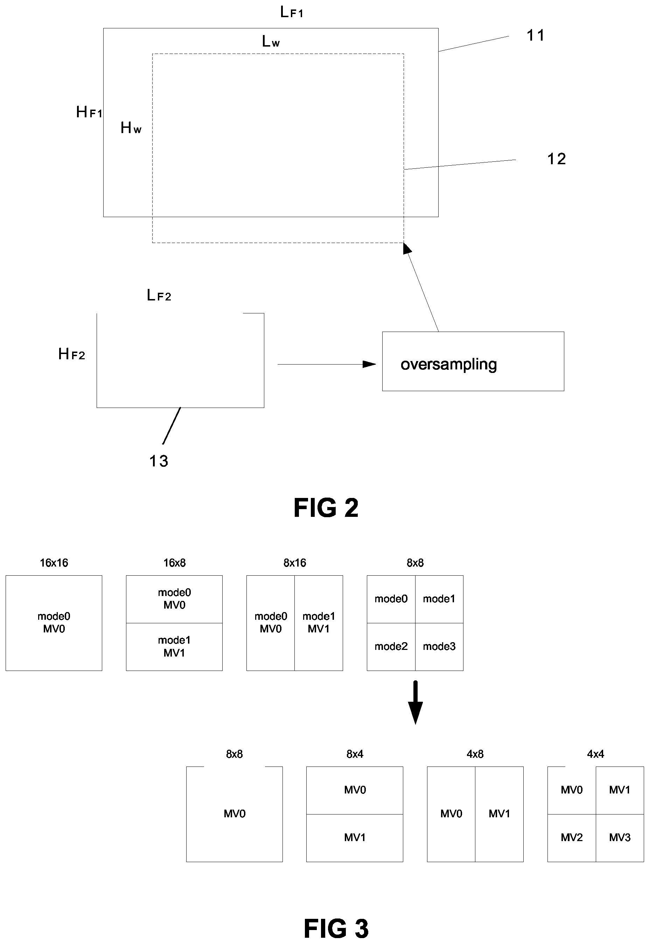

Figure 2 shows a first video content in the high-resolution coding format F1, referenced 11 and a window with dimensions $L_w$ and $H_w$, referenced 12. This window is defined and positioned within the high-resolution image based on the geometric parameters. The video content of this window is calculated from the video content in the low-resolution coding F2 format of dimensions LF2 and HF2, referenced 13. The image in the F2 format is coded then decoded in order to deliver a local decoded image which is then oversampled to produce a rescaled or zoomed image (Fz) with the dimensions of the window 12.

Figure 3 shows, in a first row, macroblocks of dimensions 16x16 pixels and the various partitions of macroblocks into sub-macroblocks such as are proposed by the MPEG4 standard. These are sub-macroblocks of dimensions 16x8, 8x16 and 8x8 pixels. Again according to the standard, the coding mode and the prediction block during the coding in inter mode can be defined for each sub-macroblock. A coding mode and, where required, a motion vector MV defining the correlated image block are thus assigned to this sub-macroblock.

In a second row in Figure 3, sub-macroblocks of dimensions 8x8 pixels and the various sub-partitions of the sub-macroblocks into blocks are shown. According to the MPEG4 standard, in the case where the macroblock is divided into 4 sub-macroblocks of dimensions 8x8 pixels, a new decomposition of these sub-macroblocks is possible into blocks of dimensions 8x4, 4x8 and 4x4 pixels for the calculation of the prediction blocks. Thus, for a coding mode defined for the 8x8 pixel sub-macroblock, the correlation calculations may make use of various subdivisions of the sub-macroblock into blocks and therefore various motion vectors associated with these blocks.

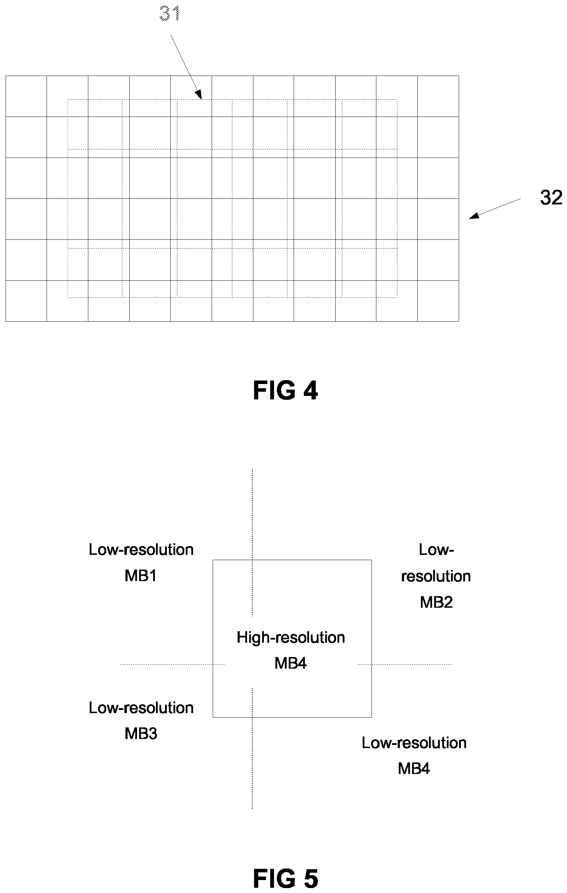

As previously indicated, the high and low resolutions do not necessarily correspond to dyadic transformations, and may also be different along the horizontal x-axis and the vertical y-axis. Figure 4 shows an overlay of a high-resolution image, referenced 31 and partitioned into HR macroblocks onto a zoomed low-resolution image referenced 32 and partitioned into BR macroblocks. An HR macroblock of the high-resolution image may have a correspondence with either no BR macroblock of the zoomed low-resolution image, for example for the edges of the high-resolution image, or one or more BR macroblocks of this zoomed low-resolution image. Figure 5 shows an HR macroblock of the high-resolution image that has a correspondence with 4 BR macroblocks of the zoomed low-resolution image.

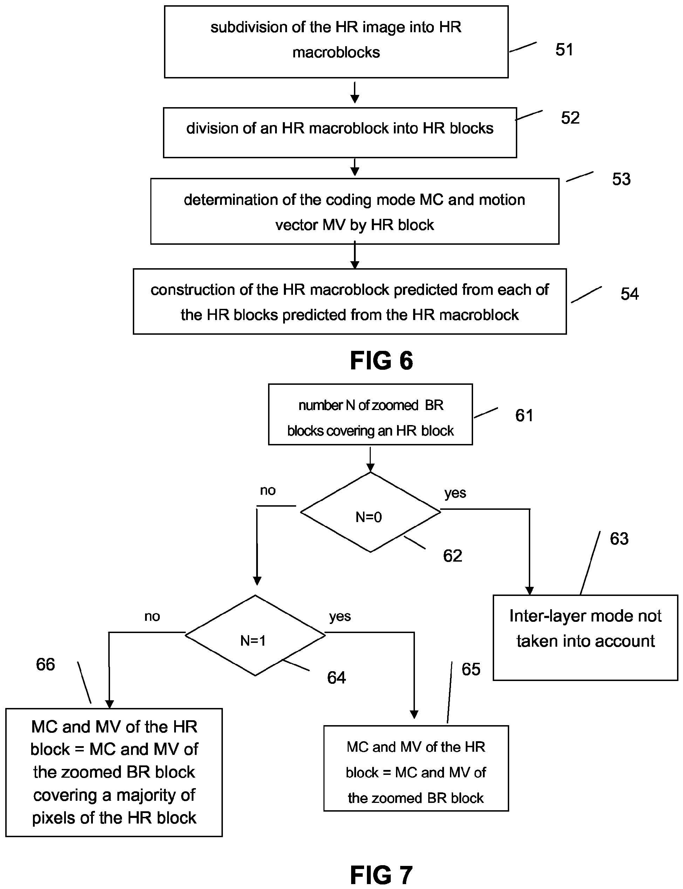

The high-resolution image is subdivided into HR macroblocks for its coding corresponding to step 5 in Figure 1. As in the MPEG4 standard, for each macroblock, a coding corresponding to a possible partition into sub-macroblocks or blocks is determined with, for a macroblock, sub-macroblock or block, the assignment of a coding mode and of motion vectors. This coding is for example a coding of the intra type for the macroblock or of the inter type for example between the current high-resolution image and the preceding high-resolution image. A new coding mode, called inter-layer coding and described hereinbelow, with reference to Figures 6 and 7, is proposed. It is added to the various known coding modes, from which the selection for the coding of the macroblock is made. This selection is generally based on entropic criteria, on criteria of coding cost, of distortion, etc. Preferably, the HR macroblocks have a size of 16x16 pixels and the HR blocks have a size corresponding to that of the blocks of a sub-macroblock in the MPEG4 standard, i.e. 4x4 pixels.

Figures 6 and 7 describe the inter-layer coding mode according to the invention.

The current macroblock of the high-resolution image is taken into account at step 51. This macroblock is subdivided into HR blocks at step 52. Step 53 determines, for each block, a coding mode and a motion vector according to the process corresponding to steps 61 to 66 described in Figure 7. The following step 54 defines the inter-layer coding mode for the macroblock, which will depend on the various coding modes and motion vectors assigned to the blocks forming the macroblock. It calculates the prediction macroblock, made up of all of the prediction blocks relating to the HR blocks forming the macroblock. Depending on the motion vectors assigned to the HR blocks, the macroblock may be partitioned, for this coding mode, into sub-macroblocks, by fusion of the HR blocks with the same motion vector.

Step 53 selects the coding mode and calculates the motion vectors of each of the HR blocks forming an HR macroblock. For this purpose, a step 61 determines the number of zoomed BR blocks covering the HR block for each of the blocks of the macroblock. If this number is equal to 0, test performed at step 62, step 63 is the next step and defines the inter-layer mode as not taken into account. If this number is equal to 1, test performed at step 64, the following step 65 defines the coding mode and the motion vector of the HR block as being the coding mode and motion vector of the zoomed BR block covering this HR block. In the opposite case, step 66 defines the coding mode and the motion vector for this HR block. For this purpose, a coding mode and a motion vector are assigned to each of the pixels of the HR block depending on the coding mode and motion vector of the zoomed BR block covering the pixel. The coding mode and the motion vector of the HR block are calculated as a function of those assigned to the pixels of the HR block. This could be a majority choice, in other words of the mode or vector corresponding to the majority of the pixels of the HR block. In an improved version, several zoomed BR blocks covering the HR block, but having different coding modes, can contribute to the HR block. For example, a first zoomed BR block has the anticipated prediction mode, better known in the MPEG standard as 'inter forward' mode, and its neighbour the 'direct spatial' mode that consists in choosing, for a current zoomed block, the mode of the neighbouring block. In the end, both these blocks can contribute to the HR block, the latter being assigned the 'inter forward' mode.

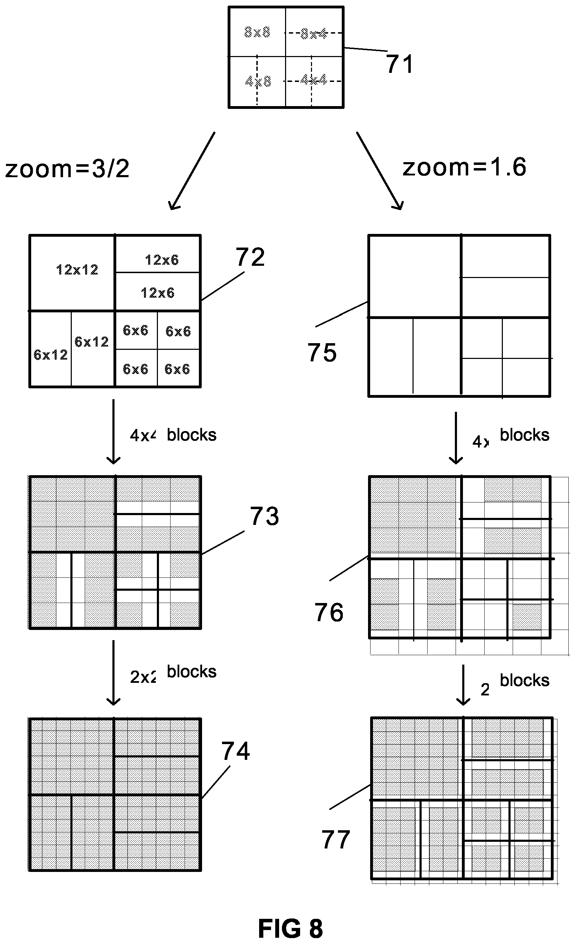

Figure 8 illustrates these various steps in examples of a zoom of 1.5 and of a zoom of 1.6 of the low-resolution image. During the coding of this low-resolution image, a macroblock of the low-resolution image, of dimensions 16x16 pixels, referenced 71, is for example partitioned into various BR sub-macroblocks and blocks of sizes 8x8 pixels, 8x4 pixels, 4x8 pixels and 4x4 pixels.

In the first example, the zoomed BR sub-macroblocks and blocks of the zoomed macroblock referenced 72 correspond to height and width dimensions of 12 pixels and of 6 pixels for the high-resolution image.

The high-resolution image is subdivided into macroblocks of size 16x16 pixels and these macroblocks are partitioned into HR blocks of size 4x4 pixels.

The zoomed low-resolution image is overlaid onto the high-resolution image, 36 HR blocks of dimensions 4x4 correspond to a zoomed BR macroblock referenced 73. The shaded HR blocks are the blocks covered by a single zoomed BR sub-macroblock or block, depending on the subdivision applied during the coding.

An additional step, consisting in a finer subdivision of the HR blocks, referenced 74, that yields HR sub-blocks, allows the coverage by a single zoomed sub-macroblock or block to be improved by making it correspond to this entity of smaller size. Here, all of these sub-blocks are covered by a single zoomed BR block. The assignment of the coding mode and of the motion vectors is effected at the HR sub-block level and no longer at the level of the HR block. This additional step may be triggered for example in the case where the number of HR blocks not covered by a single zoomed BR block is greater than a given threshold.

In the second example of a zoom ratio of 1.6, the zoomed BR sub-macroblocks and blocks of the zoomed macroblock referenced 75 correspond to height and width dimensions of 12.8 pixels and of 6.4 pixels of the high-resolution image.

The high-resolution image is subdivided into macroblocks of size 16x16 pixels and these macroblocks are partitioned into HR blocks of size 4x4 pixels.

The zoomed low-resolution image is overlaid onto the high-resolution image, and here a zoomed BR macroblock 76 corresponds to an area of less than 36 HR blocks of dimensions 4x4. The shaded HR blocks are the blocks covered by a single BR sub-macroblock or block depending on the subdivision effected during the coding of the low-resolution image.

The additional step, consisting of a finer subdivision of the HR blocks, referenced 77, to yield HR sub-blocks, allows more pixels of the high-resolution image to be made to correspond to the zoomed BR sub-macroblocks or blocks, which pixels correspond to the sub-blocks covered by a single zoomed BR sub-macroblock or block. This step can be followed by a fusion step in order to restore the size of the HR blocks, if, for example, it relates to the minimum size of the sub-macroblock blocks in the MPEG4 standard. The choice of the coding mode and of the motion vector assigned to the HR block formed from 4 fused sub-blocks may use for example the majority rule or, for the motion vectors, the mean or median value. Furthermore, this fusion principle may be extended to the HR sub-macroblocks, or even to the HR macroblocks, by adopting similar fusion rules.

As previously indicated, this additional partitioning step may be triggered in the case where the number of HR blocks not covered by a single zoomed BR block is greater than a given threshold.

The above explanation relates of course to exemplary embodiments. The subdivision of the high-resolution image may be carried out, without departing from the scope of the invention, into blocks of any given size of NxM pixels. The size may be chosen depending on the coding standards, on the horizontal and vertical zoom ratios, on the compromise between coding cost and calculation cost, a smaller size allowing a better correlation between blocks of size MxN and zoomed BR blocks owing to a non-singular choice of coding mode and motion vector for a larger surface area of the HR image as shown by the shaded area of the blocks 76 and 77 in Figure 8.

Figure 9 presents an example of assignment of the coding modes and motion vectors at the HR block level. The macroblock 91 is the zoomed BR macroblock partitioned into sub-macroblocks and blocks. A coding mode (m or mode) and a motion vector (mv) have been assigned to each sub-macroblock and block.

The high-resolution image is subdivided into HR macroblocks and blocks referenced 92. Only the HR blocks 92 covered, even partially, by the macroblock 91 are shown in the figure.

A first step consists in assigning the coding modes to the HR blocks of a macroblock.

The blocks covered by a single zoomed BR sub-macroblock or block, shown as shaded, are assigned the coding modes of the sub-macroblocks or blocks covering them. For the other cases, the choice of the dominant mode can be made.

The block referenced 93 is covered by a zoomed BR sub-macroblock and block with coding mode 0 and 1. The mode 1 is assigned to this block because this is the dominant mode, since the block corresponding to this mode 1 covers the largest number of pixels of the HR block 93.

The block referenced 94 is covered by two zoomed BR blocks with coding modes 0 and 3. There is no dominant mode since these blocks cover the same number of pixels of the HR block, so the first mode encountered is for example chosen, which is the mode 0 and which is assigned to this HR block 94.

The block referenced 95 is covered by a zoomed BR sub-macroblock and three zoomed BR blocks with coding modes 0, 2, 0, 3. The mode 0 is assigned to this HR block since it is the dominant mode, the zoomed BR block corresponding to this mode 0 covering the largest number of pixels of the HR block.

A second step consists in assigning the motion vectors to the HR blocks. The basic rule is to consider, as candidate vectors, the motion vectors of the sub-macroblocks or blocks which both cover the HR block and have, as coding mode, the mode assigned to the HR block.

The following complementary rules may be chosen:

if the mode assigned is a dominant mode, the motion vector that is dominant and that therefore relates to this mode is chosen. In this case, the motion vector assigned to the block 93 is the vector mv1.

if several blocks or sub-macroblocks cover the HR block, the motion vector is an average, potentially weighted, of the candidate motion vectors. In this case, the components of the motion vector which is assigned to the block 93 are an average of the components of the vectors mv1 and mv0. This average can be weighted as a function of the number of pixels of the HR block corresponding to each of the vectors.

if more than two blocks or sub-macroblocks cover the HR block, the motion vector is the median value of the candidate vectors.

These examples are non-limiting examples, such that it is equally possible, for the calculation of the motion vectors, to choose the mean or median value of the whole of the motion vectors of the blocks or sub-macroblocks covering the HR block, without taking into account the coding modes. The motion vectors of the preceding images may also be taken into account in the choice of the inter-layer mode motion vector.

When the coding modes and motion vectors have been assigned to all of the HR blocks of the macroblock of the high-resolution image, the inter-layer coding of this macroblock is carried out. The macroblock may be partitioned into sub-macroblocks and blocks of various sizes, to which coding modes and motion vectors are assigned. These sub-macroblocks and blocks are for example of sizes conforming to a coding standard such as the MPEG4 standard. The partition depends on the coding modes and motion vectors assigned to the HR blocks forming these sub-macroblocks and blocks. The fusion rules for the HR blocks, for forming sub-macroblocks, are known and for example relate to the motion vectors having the same value. The size of the sub-macroblocks of the high-resolution image then depends on the homogeneity of the motion vector field. These partitioning criteria are relative to the coding costs, distortions, etc.

When the partitioning has been carried out, the coding of the macroblock thus partitioned, performed according to the inter-layer coding mode, is compared with the other coding modes for the macroblock in order to determine the one actually implemented by the coder.

The subdivision of the image into HR blocks, the assignment of coding modes and of motion vectors, together with the fusion of the blocks, can also be performed at the image level, in other words before the coding by macroblock. Once the modes and vectors have been assigned to all of the blocks concerned, the neighbouring blocks that have similarities as regards these modes and vectors are fused until they correspond to sub-macroblocks or macroblocks of the image. These fusion processes depend not only on the size of the macroblocks and sub-macroblocks, but also on the location of these macroblocks within the high-resolution image.

The predictive coding mode proposed here is called 'inter-layer' mode since it makes use of coding data of the lower-resolution image and 'default' since it does not carry out a calculation for the determination of the mode and of the associated motion vector. This candidate coding mode performs a coding of the macroblock of the high-resolution image according to the associated mode or modes and motion vectors, for example starting from a block of a preceding high-resolution image designated by the associated motion vector if using the inter mode, or else starting from an already coded macroblock of the current high-resolution image designated by the associated motion vector if using the intra mode associated with the macroblock.

This coding mode described is to be added to the other known candidate coding modes for the actual coding of the high-resolution image, the choice of the mode being for example dependent on the coding cost and distortion of the image relating to each of these modes.

Amongst the known modes, a coding mode called intra predictive coding uses one of the previously coded macroblocks of the image. The current macroblock of the current high-definition image is coded by taking into account one of the already coded macroblocks of this high-resolution image and designated by the motion vector. This selection is made as a function of the strength of correlation with the current macroblock to be coded.

Another coding mode, called inter predictive coding, uses a previously coded high-resolution image. The current macrobloc of the high-resolution image is coded starting from a predictive macroblock which is an image block selected within a search window of a preceding high-resolution image. This selection is made as a function of the strength of correlation with the current macrobloc to be coded; the image block selected is defined by a motion vector. This mode may exploit more than one previously coded image, for example in the case of the bidirectional inter mode.

As regards an inter-layer predictive coding mode, this performs a coding of the macroblock of the high-resolution image starting from a prediction macroblock corresponding to the co-localized macroblocks, in other words having the same position for at least a part of their pixels, within the zoomed low-resolution image.

The low-resolution image used for the zoom can be the low-resolution image corresponding, from the temporal point of view, to the high-resolution image, but equally one or more preceding low-resolution images. The prediction block can thus be sought within the current or preceding low-resolution image which may be either the source image or the rescaled or zoomed reconstructed image.

Of course, the method is not limited, for the association of the modes and of the motion vectors with the blocks, to a single motion vector and the coding modes making use of several motion vectors, or even with no motion vector, are within the scope of the invention. Thus, when the associated coding mode is the pure intra mode, there is no assigned motion vector. Similarly, when the intercoding mode is of the bidirectional type, two vectors are associated with the coding mode.

In the same way, the method is not limited to the coding mode and motion vector. Other parameters, such as the number or numbers of the temporal reference images, the weighting factors of the luminance, respectively known as the 'reference picture index' and the 'weighted prediction factor' in the MPEG4 AVC standard, may be used according to a similar process.

In the description, the coding of the high-resolution image is carried out at the level of macroblocks made up of HR blocks. It could just as easily be envisaged, without departing from the scope of the invention, to perform a coding of the image at the HR block level, a macroblock then being composed of a single HR block and the default inter-layer predictive coding mode of the macroblock then corresponding to the coding mode and motion vector assigned according to the method to the HR block forming this macroblock.

The video images coded according to the method can be source images but equally sub-band images obtained by temporal decomposition of the wavelet type or sub-band coding of the source images.

The following part of the description gives other specific implementations of the assignment or inheritance process of the coding modes and motion vectors, including macroblock partitioning, from the base layer, also proposing modifications to the existing syntax used for the data bitstream.

Terms or semantic corresponding to the standard H 264, for example the reference indices, the reference list... or used in SVM 3,0, such as base_layer_mode, qpel_refinement_mode...are not defined as definition can be found in documents ITU_T Rec. H.264 (2002E) or "Scalable Video Model 3.0" previously cited.

Also, the mathematical operators are those used in the C programming language or in the specifications of the standard, defined for example in document ITU-T Rec.H.264 (2002 E) paragraph 5.1. For example, "/" corresponds to the integer division, "%" to the remainder of the division, "(..)?0,1" has the value 0 or 1 when the equation into brackets is respectively true or false.

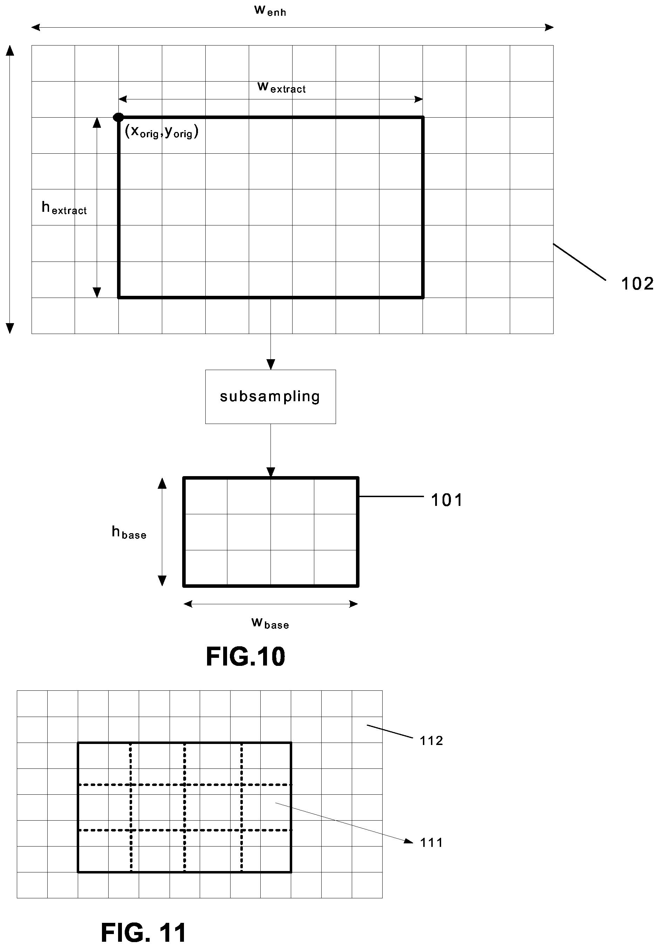

Figure 10 represents a picture within two successive spatial layers, a low layer 101, considered as base layer, and a high layer 102, considered as enhancement layer. Width and height of enhancement layer pictures are defined respectively as $w_{enh}$ and $h_{enh}$. In the same way, base layer pictures dimensions are defined as $w_{base}$ and $h_{base}$. They are a subsampled version of sub-pictures of enhancement layer pictures, of dimensions $w_{extract}$ and $h_{extract}$, positioned at coordinates $(x_{orig}, y_{orig})$ in the enhancement layer pictures coordinates system. In addition, $w_{enh}$, $h_{enh}$, $w_{base}$, $h_{base}$, $w_{extract}$ and $h_{extract}$ are constrained to be multiple of 16. The enhancement and base layer pictures are divided in macroblocks.

Upsampling factors between base layer pictures and extraction pictures in enhancement layer are respectively defined, for horizontal and vertical dimensions, as :

$$\alpha_{horiz} = w_{extract} / w_{base}$$

$$\alpha_{vertic} = h_{extract} / h_{base}$$

Parameters $(x_{orig}, y_{orig}, \alpha_{horiz}, \alpha_{vertic})$ completely define the geometrical relations between high and low layer pictures. For example, in a standard dyadic scalable version, these parameters are equal to (0,0,2,2).

In many cases a macroblock of enhancement layer may have either no base layer corresponding block, for example on borders of the enhancement layer picture, either one or several base layer corresponding macroblocks as illustrated in figure 11. In this figure, dashed lines 111 represent macroblocks of the upsampled base layer picture and solid lines 112 macroblocks of the enhancement layer picture. Consequently a different managing of the inter layer prediction than in SVM3,0 is necessary.

In the sequel, according to the semantic defined further, we will name:

$$scaled\_base\_column = x_{orig}$$

$$scaled\_base\_line = y_{orig}$$

$$scaled\_base\_width = w_{extract}$$

$$scaled\_base\_height = h_{extract}$$

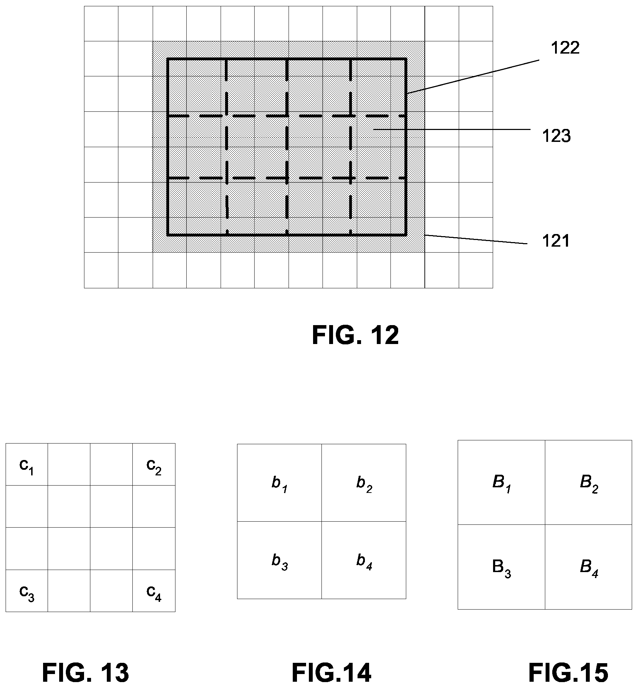

A given high layer macroblock can exploit inter-layer motion prediction using scaled base layer motion data, using either "BASE_LAYER_MODE" or "QPEL_REFINEMENT_MODE", as in case of dyadic spatial scalability. In case of using one of these two modes, the high layer macroblock is reconstructed with default motion data deduced from the base layer. These modes are only authorized for high layer macroblocks having corresponding base layer blocks, blocks corresponding, in figure 12, to the grey-colored area 121. On this figure, bold solid lines 122 represent the upsampled base layer window, bold dashed lines, the macroblocks 123 of the base layer window. This grey area 121 corresponds to macroblocks whose coordinates $(MB_x, Mb_y)$ respect the following conditions:

$$MB_x >= scaled\_base\_column / 16$$

and

$$MB_x < (scaled\_base\_column + scaled\_base\_width + 15) / 16$$

and

$$MB_y >= scaled\_base\_\ line / 16$$

and

$$MB_y < (scaled\_base\_\ line + scaled\_base\_height + 15) / 16$$

As in SVM3,0, these macroblock modes indicate that the motion/prediction information including macroblock partitioning are directly derived from the base layer. The solution consists in constructing a prediction macroblock, *MB_pred,* inheriting motion data from base layer. When using "BASE_LAYER_MODE" mode, the macroblock partitioning as well as the reference indices and motion vectors are those of the prediction macroblock *MB_pred.* "QPEL_REFINEMENT_MODE" is similar, but a quarter-sample motion vector refinement is achieved.

The process to derive *MB_pred* works in three steps:

- for each 4x4 block of *MB_pred,* inheritance of motion data from the base layer motion data
- partitioning choice for each 8x8 block of *MB_pred*
- mode choice for *MB_pred*

These 3 steps are described in the following paragraphs.

*Motion data block inheritance*

Let's consider a 4x4 high layer block *b* as represented in figure 13. The process consists in looking at the four corners of this block, identified as c1 to c4. Let (*x*, *y*) be the position of a corner pixel *c* in the high layer coordinates system. Let ($x_{base}$, $y_{base}$) the corresponding position in the base layer coordinates system, defined as follows:

$$\begin{cases} \mathbf{x}_{base} = \left[ \left( \mathbf{x} - \mathbf{x}_{orig} \right) \middle/ \alpha_{horiz} \right] \\ \mathbf{y}_{base} = \left[ \left( \mathbf{y} - \mathbf{y}_{orig} \right) \middle/ \alpha_{vertic} \right] \end{cases}$$

where [*a*] is the integer portion *a*.

Using the semantic described further, the actual formulas are as follows :

$$\begin{cases} x_{base} = \dfrac{\left(x - \text{scaled\_base\_column}\right).16.(\text{BasePicWidthInMbsMinus1} + 1)}{\text{scaled\_base\_width}} \\[4mm] y_{base} = \dfrac{\left(y - \text{scaled\_base\_line}\right).16.(\text{BasePicHeightInMbsMinus1} + 1)}{\text{scaled\_base\_height}} \end{cases}$$

BasePic_width_in_mbs_minus and BasePic_height_in_mbs_minus1 specify the size of the base layer luma picture array in units of macroblocks.

In the sequel, the co-located macroblock of pixel (*x,y*) is the base layer macroblock containing pixel ($x_{base}$,$y_{base}$). In the same way, the co-located 8x8 block of pixel (*x,y*) is the base layer 8x8 block containing pixel ($x_{base}$,$y_{base}$) and the co-located 4x4 block of pixel (*x,y*) is the base layer 4x4 block containing pixel *($x_{base}$, $y_{base}$)*.

The motion data inheritance process for *b* is the following:

- for each corner c, the reference index r(c,*listx*) and motion vector mv(c,x) of each list *listx* (*listx*=0 or 1) are set to those, if they exist, of the co-located base layer 4x4 block
- for each corner c,

   > if no co-located macroblock exists, or if the co-located macroblock is in intra mode, then b is set as an intra block

   > else, for each list *listx*

      » if none of the corners uses this list, no reference index and motion vector for this list is set to b

      » else

         >>>the reference index rb(listx) set for b is the minimum of the existing reference indices of the 4 corners:

$$r_b\left(listx\right) = \min_c\left(r(c, listx)\right)$$

         >>>the motion vector mvb(listx) set for b is the mean of existing motion vectors of the 4 corners, having the reference index rb(listx).

*Partitioning choice*

Once each 4x4 block motion data has been set, a merging process is necessary in order to determine the actual partitioning of the 8x8 block it belongs to and to avoid forbidden configurations. In the following, 4x4 blocks b of a 8x8 block B are identified as b1 to b4, as indicated in figure 14.

For each 8x8 block, the following process is applied:

- if the 4 4x4 blocks have been classified as intra blocks, B is considered as an intra block.
- else, B partitioning choice is achieved:

> The following process for assigning the same reference indices to each 4x4 block is applied: for each list listx

» if no 4x4 block uses this list, no reference index and motion vector of this list are set to B
>> else

>>> reference index rB(listx) for B is computed as the minimum of the existing reference indices of the 4 4x4 blocks:

$$r_B(\text{listx}) = \min_b \left( r_b(\text{listx}) \right)$$

>>> mean motion vector mvmean(listx) of the 4x4 blocks having the same reference index rB(listx) is computed
>>> 4x4 blocks (1) classified as intra blocks or (2) not using this list or (3) having a reference index rb(listx) different from rB(listx) are enforced to have rB(listx) and mvmean(listx) as reference index and motion vector.

> Then the choice of the partitioning mode for B is achieved. Two 4x4 blocks are considered as identical if their motion vectors are identical. The merging process is applied as follows:

>>if b1 is identical to b2 and b3 is identical to b4 then

>>> if b1 is identical to b3 then BLK_8x8 is chosen
>>> else BLK_8x4 is chosen

>> else if b1 is identical to b3 and b2 is identical to b4 then BLK_4x8 is chosen

>> else BLK_4x4 is chosen.

*Prediction macroblock mode choice*

A final process is achieved to determine the MB_pred mode. In the following, 8x8 blocks of the macroblock are identified as B1 to B4, as indicated in figure 15.
Two 8x8 blocks are considered as identical blocks if:

- One or both of the two 8x8 blocks are classified as intra blocks or
- Partitioning mode of both blocks is BLK_8x8 and reference indices and motion vectors of list0 and list1 of each 8x8 block, if they exist, are identical.

The mode choice is done using the following process:

- if all 8x8 blocks are classified as intra blocks, then MB_pred is classified as INTRA macroblock
- else, MB_pred is an INTER macroblock. Its mode choice is achieved as follows:

> 8x8 blocks classified as intra are enforced to BLK_8x8 partitioning. Their reference indices and motion vectors are computed as follows. Let BINTRA be such a 8x8 block. for each list listx

>> if no 8x8 block uses this list, no reference index and motion vector of this list is assigned to BINTRA
>> else, the following steps are applied:

>>> a reference index rmin(listx) is computed as the minimum of the existing reference indices of the 8x8 blocks:

$$r_{min}(listx) = \min_{B}(r_B(listx))$$

>>> a mean motion vector mvmean(listx) of the 8x8 blocks having the same reference index rmin(listx) is computed
>>> rmin(listx) is assigned to BINTRA and each 4x4 block of BINTRA is enforced to have rmin(listx) and mvmean(listx) as reference index and motion vector.

> Then the choice of the partitioning mode for B is achieved. Two 8x8 blocks are considered as identical if their Partitioning mode is BLK_8x8 and reference indices and motion vectors of list0 and list1 of each 8x8 block, if they exist, are identical. The merging process is applied as follows:

>> if B1 is identical to B2 and B3 is identical to B4 then

>>> if B1 is identical to B3 then MODE_16x16 is chosen. >>> else MODE_16x8 is chosen.

>> else if B1 is identical to B3 and B2 is identical to B4 then MODE_8x16 is chosen.
>> else MODE_8x8 is chosen.

*Motion vectors scaling*

A motion vector rescaling is finally applied to every existing motion vectors of the prediction macroblock MB_pred. A Motion vector mv=(dx,dy) is scaled in the vector $mv_s=(d_{sx},d_{sy})$ using the following equations:

$$\begin{cases} d_{sx} = \lfloor d_x . \alpha_{horiz} \rfloor \\ d_{sy} = \lfloor d_y . \alpha_{vertic} \rfloor \end{cases}$$

Using the semantic described further, the actual formulas are as follows :

$$d_{sx} = \begin{cases} \dfrac{2.d_x.\text{scaled\_base\_width} + 16.(\text{BasePicWidthInMbsMinus1} + 1)}{2.16.(\text{BasePicWidthInMbsMinus1} + 1)} & \text{if } d_x >= 0 \\[3ex] -\dfrac{-2.d_x.\text{scaled\_base\_width\_in\_mbs} + (\text{BasePicWidthInMbsMinus1} + 1)}{2.(\text{BasePicWidthInMbsMinus1} + 1)} & \text{if } d_x < 0 \end{cases}$$

$$d_{sy} = \begin{cases} \dfrac{2.d_y.\text{scaled\_base\_height} + 16.(\text{BasePicHeightInMbsMinus1} + 1)}{2.16.(\text{BasePicHeightInMbsMinus1} + 1)} & \text{if } d_y >= 0 \\[3ex] -\dfrac{-2.d_y.\text{scaled\_base\_height} + 16.(\text{BasePicHeightInMbsMinus1} + 1)}{2.16.(\text{BasePicHeightInMbsMinus1} + 1)} & \text{if } d_y < 0 \end{cases}$$

*Inter-Layer texture Prediction*

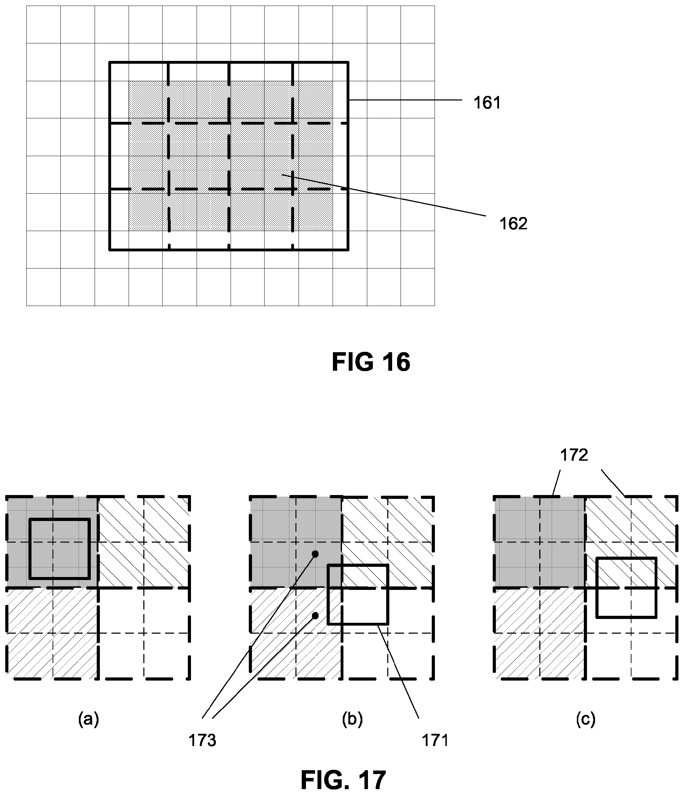

Inter layer texture prediction is based on the same principles as inter layer motion prediction. However it is only possible for macroblocks fully embedded in the scaled base layer window 161 in figure 16, that is, macroblocks corresponding to the grey-colored area 162, whose coordinates ($MB_x,Mb_y$) respect the following conditions:

$$MB_x >= (scaled\_base\_column+15) / 16$$

and

$$MB_x < (scaled\_base\_column+ scaled\_base\_width) / 16$$

and

$$MB_y >= (scaled\_base\_line+15) / 16$$

and

$$MB_y < (scaled\_base\_line + scaled\_base\_height) / 16$$

Base layer texture is upsampled, for example, by applying the two-lobed or three-lobed Lanczos-windowed sinc functions. These filters, widely used in graphics applications, described in the document titled "Filters for common resampling tasks", author Ken Turkowski, Apple Computer, April 1990, are considered to offer the best compromise in terms of reduction of aliasing, sharpness, and minimal ringing. The two-lobed Lanczos-windowed sinc function is defined as follows:

$$\text{Lanczos } 2(x) = \begin{cases} \dfrac{\sin(\pi x)}{\pi x} \dfrac{\sin(\pi \frac{x}{2})}{\pi \frac{x}{2}} & , |x| < 2 \\ 0 & , |x| \geq 2 \end{cases}$$

Simpler filters, such as bilinear filter, may also be used.

This upsampling step may be processed either on the full frame or block by block. In this latter case and for frame borders, repetitive padding is used.

Inter-Layer Intra texture Prediction

A given macroblock *MB* of current layer, high layer, can exploit inter layer intra texture prediction ("I_BL" mode) only if co-located macroblocks of the base layer exist and are intra macroblocks. Co-located base layer macroblocks are those that, once upsampled, partly or completely cover *MB.* Figure 17 illustrates three possible cases (a), (b) and (c). The bold solid line 171 corresponds to the current 16x16 macrobloc MB of the high layer. The bold dotted lines correspond to the scaled 16x16 base layer macroblocks 172: current macroblock MB may be included into 1, figure 17a, up to 4, figure 17b, scaled base layer MB.

Intra texture prediction may be used both in low pass and high pass pictures, resulting from the temporal filtering performed at the encoder (a group of pictures is temporally filtered to generate one low pass picture and several high pass pictures, corresponding to different temporal frequency bands).

For generating the intra prediction signal for high-pass macroblocks, that is, macroblocks belonging to temporal high frequency pictures, coded in I-BL mode, the co-located 8x8 blocks 173 of the base layer high-pass signal are directly de-blocked and interpolated, as in case of 'standard' dyadic spatial scalability.

Inter-Layer Residual Prediction

Inter texture prediction may be used only for high pass pictures.

A given macroblock *MB* of current layer can exploit inter layer residual prediction only if co-located macroblocks of the base layer exist and are not intra macroblocks.

Changes in Syntax and Semantics

Syntax in tabular form, where changes are highlighted, is given at the end of the specification. The main changes are the addition in the slice header syntax of a flag extended_spatial_scalability, and accordingly 4 parameters, scaled_base_column, scaled_base_line, scaled_base_width, scaled_base_height, related to the geometrical transformation to be applied in the base layer upsampling process.
extended_spatial_scalability specifies the presence of syntax elements related to geometrical parameters for the base layer upsampling in the slice header. When this syntax element is not present, it shall be inferred to be equal to 0.
scaled-base-column corresponds to the horizontal coordinate of the upper left pixel of the upsampled base layer in the current layer coordinates system.
scaled_base_line corresponds to the vertical coordinate of the upper left pixel of the upsampled base layer in the current layer coordinates system.
scaled_base_width corresponds to the number of pixels per line of the upsampled base layer in the current layer.
scaled_base_height corresponds to the number of pixels per column of the upsampled base layer in the current layer.
BaseLayer specifies whether the current layer is the base layer, the spatial base layer. If BaseLayer is equal to 1, the current layer is the base layer.

Decoding Process

Decoding process for prediction data

Compared to SVM3.0, the following processes have to be added.
For each macroblock, the following applies.

- If base_layer_mode_flag is equal to 1 and if extended_spatial_scalability is equal to 1, the motion vector field including the macroblock partitioning is deduced using the process previously described. As in SVM3.0, if the base layer macroblock represents an intra macroblock, the current macroblock mode is set to I_BL.
- Otherwise, if base_layer_mode_flag is equal to 0 and base_layer_refinement_flag is equal to 1, the base layer refinement mode is signalled. The base_layer_refinement_flag is only present, when the base layer represents a layer with a different spatial resolution than the current layer spatial resolution. The base layer refinement mode is similar to the base layer prediction mode. The macroblock partitioning as well as the reference indices and motion vectors are derived as for the base layer prediction mode. However, for each motion vector, a quarter-sample motion vector refinement mvd_ref_IX (-1, 0, or +1 for each motion vector component) is additionally transmitted and added to the derived motion vectors.

The rest of the process is identical as in SVM3.0.

Decoding process for subband pictures

Compared to SVM3.0, the following processes have to be added.

- If mb_type specifies an I macroblock type that is equal to I_BL and if extended_spatial_scalability is equal to 1, intra prediction signal is generated by the following process.

> The 8x8 blocks of the base layer picture BasePic that cover partly or completely the same area as the current macroblock are referred to as base layer blocks, the corresponding macroblocks they belong to are referred to as base layer macroblocks.
> The base layer blocks / macroblocks are extended by a 4-pixel border in each direction using the same process as described in section 6.3 of SVM3.0.
> The intra prediction signal is generated by interpolating the padded and deblocked base layer blocks. The interpolation is performed using the upsampling process previously described.

The rest of the process is identical as in SVM3.0.

- Otherwise, if mb_type does not specify an I macroblock mode and if extended_spatial_scalability is equal to 1, and if residual_prediction_flag is equal to 1, the following applies.

> The residual signal of the base layer blocks is upsampled and added to the residual signal of the current macroblock. The interpolation filter is not applied across boundaries between transform blocks. The interpolation is performed using the upsampling process previously described.

# Sequence parameter set RBSP syntax

| seq_parameter_set_rbsp( ) { | C | Descriptor |
|---|---|---|
| profile_idc | 0 | u(8) |
| constraint_set0_flag | 0 | u(1) |
| constraint_set1_flag | 0 | u(1) |
| constraint_set2_flag | 0 | u(1) |
| constraint_set3_flag | 0 | u(1) |
| reserved_zero_4bits /* equal to 0 */ | 0 | u(4) |
| level_idc | 0 | u(8) |
| seq_parameter_set_id | 0 | ue(v) |
| if( profile_idc == 100 \|\| profile_idc == 110 \|\|     profile_idc == 122 \|\| profile_idc == 144 \|\|     profile_idc == 83 ) ) { | | |
|   chroma_format_idc | 0 | ue(v) |
|   if( chroma_format_idc == 3 ) | | |
|     residual_colour_transform_flag | 0 | u(1) |
|   bit_depth_luma_minus8 | 0 | ue(v) |
|   bit_depth_chroma_minus8 | 0 | ue(v) |
|   qpprime_y_zero_transform_bypass_flag | 0 | u(1) |
|   seq_scaling_matrix_present_flag | 0 | u(1) |
|   if( seq_scaling_matrix_present_flag ) | | |
|     for( i = 0; i < 8; i++ ) { | | |
|       seq_scaling_list_present_flag[ i ] | 0 | u(1) |
|       if( seq_scaling_list_present_flag[ i ] ) | | |
|         if( i < 6 ) | | |
|           scaling_list( ScalingList4x4[ i ], 16,                   UseDefaultScalingMatrix4x4Flag[ i ]) | 0 | |
|         else | | |
|           scaling_list( ScalingList8x8[ i − 6 ], 64,                   UseDefaultScalingMatrix8x8Flag[ i − 6 ] ) | 0 | |
|       } | | |
|   } | | |

| | | |
|---|---|---|
| log2_max_frame_num_minus4 | 0 | ue(v) |
| pic_order_cnt_type | 0 | ue(v) |
| if( pic_order_cnt_type == 0 ) | | |
|    log2_max_pic_order_cnt_lsb_minus4 | 0 | ue(v) |
| else if( pic_order_cnt_type == 1 ) { | | |
|    delta_pic_order_always_zero_flag | 0 | u(1) |
|    offset_for_non_ref_pic | 0 | se(v) |
|    offset_for_top_to_bottom_field | 0 | se(v) |
|    num_ref_frames_in_pic_order_cnt_cycle | 0 | ue(v) |
|    for( i = 0; i < num_ref_frames_in_pic_order_cnt_cycle; i++ ) | | |
|       offset_for_ref_frame[ i ] | 0 | se(v) |
| } | | |
| num_ref_frames | 0 | ue(v) |
| gaps_in_frame_num_value_allowed_flag | 0 | u(1) |
| pic_width_in_mbs_minus1 | 0 | ue(v) |
| pic_height_in_map_units_minus1 | 0 | ue(v) |
| frame_mbs_only_flag | 0 | u(1) |
| if( !frame_mbs_only_flag ) | | |
|    mb_adaptive_frame_field_flag | 0 | u(1) |
| direct_8x8_inference_flag | 0 | u(1) |
| frame_cropping_flag | 0 | u(1) |
| if( frame_cropping_flag ) { | | |
|    frame_crop_left_offset | 0 | ue(v) |
|    frame_crop_right_offset | 0 | ue(v) |
|    frame_crop_top_offset | 0 | ue(v) |
|    frame_crop_bottom_offset | 0 | ue(v) |
| } | | |
| if( ! BaseLayer ) { | | |
|    extended_spatial_scalability | 2 | u(1) |
|    if( extended_spatial_scalability != 0 ) { | | |
|       scaled_base_column | 2 | ue(v) |
|       scaled_base_line | 2 | ue(v) |
|       scaled_base_width | 2 | ue(v) |
|       scaled_base_height | 2 | ue(v) |
|    } | | |
| } | | |
| vui_parameters_present_flag | 0 | u(1) |
| if( vui_parameters_present_flag ) | | |
|    vui_parameters( ) | 0 | |
| rbsp_trailing_bits( ) | 0 | |
| } | | |

# Macroblock layer in scalable extension syntax

| macroblock_layer_in_scalable_extension( ) { | C | Descriptor |
|---|---|---|
| if( base_layer_id_plus1 != 0 && adaptive_prediction_flag ) { | | |
|    **base_layer_mode_flag** | 2 | ae(v) |
|    if( ! base_layer_mode_flag && <br>      (HalfResolutionBaseLayer \|\| extended_spatial_scalability) && <br>      ! IntraBaseLayerMacroblock ) | | |
|    **base_layer_refinement_flag** | 2 | ae(v) |
| } | | |
| if( ! base_layer_mode_flag && ! base_layer_refinement_flag ) { | | |
|    **Mb_type** | 2 | ae(v) |
|    if( mb_type == I_NxN && base_layer_id_plus1 != 0 ) | | |
|      **intra_base_flag** | 2 | ae(v) |
| } | | |
| if( MbType == I_PCM ) { | | |
|    while( !byte_aligned( ) ) | | |
|      **pcm_alignment_zero_bit** | 2 | f(1) |
|    for( i = 0; i < 256; i++ ) | | |
|      **pcm_sample_luma**[ i ] | 2 | u(v) |
|    for( i = 0; i < 2 * MbWidthC * MbHeightC; i++ ) | | |
|      **pcm_sample_chroma**[ i ] | 2 | u(v) |
| } else { | | |
|    NoSubMbPartSizeLessThan8x8Flag = 1 | | |
|    if( MbType != I_NxN && MbType != I_BL && <br>      MbPartPredMode( MbType, 0 ) != Intra_16x16 && <br>      NumMbPart( MbType ) == 4 ) { | | |
|      if( ! base_layer_mode_flag ) | | |
|        sub_mb_pred_in_scalable_extension( MbType ) | 2 | |
|      for( mbPartIdx = 0; mbPartIdx < 4; mbPartIdx++ ) | | |
|        if( SubMbType[ mbPartIdx ] != B_Direct_8x8 ) { | | |
|          if( NumSubMbPart( SubMbType[ mbPartIdx ] ) > 1 ) | | |
|            NoSubMbPartSizeLessThan8x8Flag = 0 | | |
|        } else if( !direct_8x8_inference_flag ) | | |
|          NoSubMbPartSizeLessThan8x8Flag = 0 | | |
|    } else { | | |
|      if( transform_8x8_mode_flag && MbType == I_NxN ) | | |
|        **transform_size_8x8_flag** | 2 | ae(v) |
|      mb_pred_in_scalable_extension( MbType ) | 2 | |
|    } | | |
|    if( MbPartPredMode( MbType, 0 ) != Intra_16x16 ) { | | |

| coded_block_pattern | 2 | ae(v) |
|---|---|---|
| if( CodedBlockPatternLuma > 0 && <br> transform_8x8_mode_flag && MbType != I_NxN && <br> NoSubMbPartSizeLessThan8x8Flag && <br> !( MbPartPredMode( MbType, 0 ) == B_Direct_16x16 && <br> !direct_8x8_inference_flag ) ) | | |
| transform_size_8x8_flag | 2 | ae(v) |
| } | | |
| if( CodedBlockPatternLuma > 0 \|\| CodedBlockPatternChroma > 0 \|\| <br> MbPartPredMode( MbType, 0 ) == Intra_16x16 ) { | | |
| mb_qp_delta | 2 | ae(v) |
| residual_in_scalable_extension( ) | 3 \| 4 | |
| } | | |
| } | | |
| } | | |

## Claims

1. Method for inheriting coding data, for a first image (F1) in the format F1 (102), from coding data of a second image (F2) in the format F2 (101) of lower resolution than the first format F1, the video content of the first and second images (F1) and (F2) having at least one common part, the first image and the second image being partitioned respectively into HR blocks and BR blocks, a coding mode and motion data having been calculated and attributed to BR blocks of the second image (F2) for their coding/decoding, **characterized in that** the following steps are implemented:

   - superimposition (4), after zooming (3) and for the common part, of the second image in the format F2 onto the first image in the format F1
   - determination (61) of the number of zoomed BR blocks covering the said HR block,
   - if this number equals 1 (64), assignment of the mode and motion data (65) of the zoomed BR block to this HR image block,
   - if this number is greater than 1, assignment of a mode and of motion data (66) as a function of the modes and the motion data of the zoomed BR blocks covering this HR block,
   - merging neighbouring HR blocks depending on the similarity of the motion data and/or of the coding modes assigned to the HR blocks and assigning of the coding modes and motion data to the new blocks according to the coding modes and motion data of the merged blocks.

2. Method according to claim 1, **characterised in that** the first image is split into macroblocks made up of a predetermined number of HR blocks and **in that** the step of merging is implemented on HR blocks of a same macroblock.

3. Method according to Claim 1, **characterized in that** the second image in the format F2 is partitioned into macroblocks, **in that** a macroblock is partitioned into sub-macroblocks, which are themselves subdivided into blocks according to the coding modes chosen for the macroblock, a BR block corresponding, for each macroblock, to a macroblock, a sub-macroblock or a block, depending on the partition of the macroblock.

4. Method according to Claim 1, **characterized in that** the size of a HR block corresponds to the size of a block making up a sub-macroblock in the MPEG4 AVC standard.

5. Method according to Claim 1, **characterized in that**, if the number is greater than one, the coding mode assigned to the HR block is the majority or predominant mode.

6. Method according to Claim 5, **characterized in that** the motion data are at least a motion vector and **in that** the motion vector assigned to the HR block is chosen from amongst the candidate motion vectors corresponding to the zoomed BR blocks covering the block and having the assigned coding mode.

7. Method according to Claim 1, **characterized in that** the images are sub-band images obtained by temporal decomposition of the wavelet type or sub-band coding of the source images.

8. Method according to claim 1, **characterised in that** the BR blocks covering a HR block are determined by selecting the BR blocks collocated to the pixels corresponding to each corner of the HR block.

9. Method according to claim 1, **characterised in that** motion data are the picture reference indexes and corresponding motion vectors as defined in H264 standard.

10. Method according to claim 9, **characterised in that**, when several reference indexes exist for a list, the one selected for the block is the minimum and **in that**, when several motion vectors exist for the selected reference index, the assigned motion vector corresponds to their mean value.

11. Method for scalable coding of images with a F1 format (102) corresponding to an enhanced layer and with a F2 format (101) having a lower resolution than F1, corresponding to a base layer, **characterised in that** it implements a method for inheriting coding data according to claim 1 and **in that** it further implements a step of coding blocks or merged blocks according to the assigned coding mode and motion data.

12. Method for decoding data of images with a F1 format (102) corresponding to an enhanced layer and a F2 format (101) having a lower resolution than F1, corresponding to a base layer, **characterised in that** it implements a method for inheriting coding data according to claim 1 and **in that** it further implements a step of decoding blocks or merged blocks according to the assigned coding mode and motion data.

**Patentansprüche**

1. Verfahren zum Erben von Codierungsdaten für ein erstes Bild (F1) in dem Format F1 (102) von Codierungsdaten eines zweiten Bilds (F2) in dem Format F2 (101) mit einer niedrigeren Auflösung als das erste Format F1, wobei der Videoinhalt des ersten und des zweiten Bilds (F1) und (F2) mindestens einen gemeinsamen Teil besitzt, wobei das erste Bild und das zweite Bild in HR-Blöcke bzw. in BR-Blöcke unterteilt sind, wobei für BR-Blöcke des zweiten Bilds (F2) für ihre Codierung/Codierung eine Codierungsbetriebsart und Bewegungsdaten berechnet und ihnen zugeschrieben worden sind, **dadurch gekennzeichnet, dass** die folgenden Schritte implementiert werden:

- Überlagerung (4) des zweiten Bilds in dem Format F2 auf das erste Bild in dem Format F1 nach dem Zoomen (3) und für den gemeinsamen Teil,
- Bestimmung (61) der Anzahl gezoomter BR-Blöcke, die den HR-Block bedecken,
- Zuweisung der Betriebsart und der Bewegungsdaten (65) des gezoomten BR-Blocks zu diesem HR-Bildblock, falls diese Anzahl gleich 1 ist (64),
- Zuweisung einer Betriebsart und von Bewegungsdaten (66) in Abhängigkeit von den Betriebsarten und von den Bewegungsdaten der gezoomten BR-Blöcke, die diesen HR-Block bedecken, falls diese Anzahl größer als 1 ist,
- Vereinigen benachbarter HR-Blöcke in Abhängigkeit von der Ähnlichkeit der Bewegungsdaten und/oder der Codierungsbetriebsarten, die den HR-Blöcken zugewiesen sind, und Zuweisen der Codierungsbetriebsarten und der Bewegungsdaten zu den neuen Blöcken in Übereinstimmung mit den Codierungsbetriebsarten und Bewegungsdaten der vereinigten Blöcke.

2. Verfahren nach Anspruch 1, **dadurch gekennzeichnet, dass** das erste Bild in Makroblöcke geteilt wird, die aus einer vorgegebenen Anzahl von HR-Blöcken bestehen, und dass der Schritt des Vereinigens an HR-Blöcken eines selben Makroblocks implementiert wird.

3. Verfahren nach Anspruch 1, **dadurch gekennzeichnet, dass** das zweite Bild in dem Format F2 in Makroblöcke unterteilt wird, dass ein Makroblock in Submakroblöcke unterteilt wird, die in Übereinstimmung mit den für den Makroblock gewählten Codierungsbetriebsarten selbst in Blöcke unterteilt sind, wobei ein BR-Block für jeden Makroblock in Abhängigkeit von der Unterteilung des Makroblocks einem Makroblock, einem Submakroblock oder einem Block entspricht.

4. Verfahren nach Anspruch 1, **dadurch gekennzeichnet, dass** die Größe eines HR-Blocks der Größe eines Blocks entspricht, der einen Submakroblock in der AVC-Norm MPEG4 bildet.

5. Verfahren nach Anspruch 1, **dadurch gekennzeichnet, dass** die dem HR-Block zugewiesene Codierungsbetriebsart die Hauptbetriebsart oder die dominierende Betriebsart ist, falls die Anzahl größer als eins ist.

6. Verfahren nach Anspruch 5, **dadurch gekennzeichnet, dass** die Bewegungsdaten mindestens ein Bewegungsvektor sind und dass der dem HR-Block zugewiesene Bewegungsvektor unter den Kandidatenbewegungsvektoren gewählt wird, die den gezoomten BR-Blöcken entsprechen, die den Block bedecken und die die zugewiesene Codierungsbetriebsart besitzen.

7. Verfahren nach Anspruch 1, **dadurch gekennzeichnet, dass** die Bilder Subbandbilder sind, die durch zeitliche Zerlegung des Wavelet-Typs oder durch Subbandcodierung der Quellbilder erhalten werden.

8. Verfahren nach Anspruch 1, **dadurch gekennzeichnet, dass** die BR-Blöcke, die einen HR-Block bedecken, durch Auswählen der BR-Blöcke, die mit den Pixeln, die jeder Ecke des HR-Blocks entsprechen, kollokiert sind, bestimmt werden.

9. Verfahren nach Anspruch 1, **dadurch gekennzeichnet, dass** die Bewegungsdaten die Bildreferenzindizes sind und Bewegungsvektoren entsprechen, wie sie in der Norm H264 definiert sind.

10. Verfahren nach Anspruch 9, **dadurch gekennzeichnet, dass** dann, wenn für eine Liste mehrere Referenzindizes existieren, der für den Block ausgewählte der Minimale ist, und dass dann, wenn für den ausgewählten Referenzindex mehrere Bewegungsvektoren existieren, der zugewiesene Bewegungsvektor ihrem Mittelwert entspricht.

11. Verfahren zum skalierbaren Codieren von Bildern mit einem F1-Format (102), das einer Erweiterungsschicht entspricht, und mit einem F2-Format (101) mit einer niedrigeren Auflösung als F1, das einer Basisschicht entspricht, **dadurch gekennzeichnet, dass** das Verfahren ein Verfahren zum Erben von Codierungsdaten nach Anspruch 1 implementiert und dass es ferner einen Schritt des Codierens von Blöcken oder vereinigten Blöcken in Übereinstimmung mit der zugewiesenen Codierungsbetriebsart und mit den zugewiesenen Bewegungsdaten implementiert.

12. Verfahren zum Decodieren von Daten von Bildern mit einem F1-Format (102), das einer Erweiterungsschicht entspricht, und mit einem F2-Format (101) mit einer niedrigeren Auflösung als F1, das einer Basisschicht entspricht, **dadurch gekennzeichnet, dass** das Verfahren ein Verfahren zum Erben von Codierungsdaten nach Anspruch 1 implementiert und dass es ferner einen Schritt des Decodierens von Blöcken oder vereinigten Blöcken in Übereinstimmung mit der zugewiesenen Codierungsbetriebsart und mit den zugewiesenen Bewegungsdaten implementiert.

**Revendications**

1. Procédé d'héritage de données de codage, pour une première image (F1) au format F1 (102), à partir de données de codage d'une deuxième image (F2) au format F2 (101) d'une résolution inférieure à celle du premier format F1, le contenu vidéo des première et deuxième images (F1) et (F2) ayant au moins une partie commune, la première image et la deuxième image étant partitionnées respectivement en blocs HR et en blocs BR, un mode de codage et des données de mouvement ayant été calculés et attribués aux blocs BR de la deuxième image (F2) en vue de leur codage/décodage, **caractérisé en ce que** les étapes suivantes sont mises en oeuvre :

   - superposition (4), après zoom (3) et pour la partie commune, de la deuxième image au format F2 à la première image au format F1,
   - détermination (61) du nombre de blocs BR zoomés couvrant ledit bloc HR,
   - si ce nombre est égal à 1 (64), affectation du mode et des données de mouvement (65) du bloc BR zoomé à ce bloc d'images HR,
   - si ce nombre est supérieur à 1, affectation d'un mode et de données de mouvement (66) en fonction des modes et des données de mouvement des blocs BR zoomés couvrant ce bloc HR,
   - fusion de blocs HR voisins selon la similarité des données de mouvement et/ou des modes de codage affectés aux blocs HR et affectation des modes de codage et des données de mouvement aux nouveaux blocs en fonction des modes de codage et des données de mouvement des blocs fusionnés.

2. Procédé selon la revendication 1, **caractérisé en ce que** la première image est divisée en macroblocs composés d'un nombre prédéterminé de blocs HR et **en ce que** l'étape de fusion est mise en oeuvre sur les blocs HR d'un même macrobloc.

**3.** Procédé selon la revendication 1, **caractérisé en ce que** la deuxième image au format F2 est partitionnée en macroblocs, **en ce qu'**un macrobloc est partitionné en sous-macroblocs, qui sont eux-mêmes divisés en blocs en fonction des modes de codage choisis pour le macrobloc, un bloc BR correspondant, pour chaque macrobloc, à un macrobloc, un sous-macrobloc ou un bloc, selon la partition du macrobloc.

**4.** Procédé selon la revendication 1, **caractérisé en ce que** la taille d'un bloc HR correspond à la taille d'un bloc constituant un sous-macrobloc dans la norme MPEG-4 AVC.

**5.** Procédé selon la revendication 1, **caractérisé en ce que**, si le nombre est supérieur à 1, le mode de codage affecté au bloc HR est le mode majoritaire ou prédominant.

**6.** Procédé selon la revendication 5, **caractérisé en ce que** les données de mouvement sont au moins un vecteur de mouvement et **en ce que** le vecteur de mouvement affecté au bloc HR est choisi parmi les vecteurs de mouvement candidats correspondant aux blocs BR zoomés couvrant le bloc et ayant le mode de codage affecté.

**7.** Procédé selon la revendication 1, **caractérisé en ce que** les images sont des images de sous-bandes obtenues par une décomposition temporelle du codage par ondelettes ou en sous-bandes des images source.

**8.** Procédé selon la revendication 1, **caractérisé en ce que** les blocs BR couvrant un bloc HR sont déterminés par la sélection des blocs BR contigus aux pixels correspondant à chaque coin du bloc HR.

**9.** Procédé selon la revendication 1, **caractérisé en ce que** les données de mouvement sont les indices de référence d'image correspondant aux vecteurs de mouvement définis dans la norme H264.

**10.** Procédé selon la revendication 9, **caractérisé en ce que**, lorsque plusieurs indices de référence existent pour une liste, celui sélectionné pour le bloc est le minimum et **en ce que**, lorsque plusieurs vecteurs de mouvement existent pour l'indice de référence sélectionné, le vecteur de mouvement affecté correspond à leur valeur moyenne.

**11.** Procédé de codage scalable d'images dans un format F1 (102) correspondant à une couche améliorée et dans un format F2 (101) présentant une résolution inférieure à celle du format F1, correspondant à une couche de base, **caractérisé en ce qu'**il met en oeuvre un procédé d'héritage des données de codage conformément à la revendication 1 et **en ce qu'**il met en outre en oeuvre une étape de codage de blocs ou de blocs fusionnés en fonction du mode de codage et des données de mouvement affectés.

**12.** Procédé de décodage de données d'images dans un format F1 (102) correspondant à une couche améliorée et dans un format F2 (101) présentant une résolution inférieure à celle du format F1, correspondant à une couche de base, **caractérisé en ce qu'**il met en oeuvre un procédé d'héritage de données de codage conformément à la revendication 1 et **en ce qu'**il met en outre en oeuvre une étape de décodage de blocs ou de blocs fusionnés en fonction du mode de codage et des données de mouvement affectés.

```
┌─────────────────────────────────┐
│   Formats to be coded F1, F2    │      1
└─────────────────────────────────┘
                │
                ▼
┌─────────────────────────────────┐
│          Coding of (F2)         │      2
└─────────────────────────────────┘
                │
                ▼
┌─────────────────────────────────┐
│        Decoding of (F2)         │      3
│   Zoom of the decoded image     │
└─────────────────────────────────┘
                │
                ▼
┌─────────────────────────────────┐
│     Positioning of (Fz) onto (F1)    │   4
└─────────────────────────────────┘
                │
                ▼
┌─────────────────────────────────┐
│     Coding of the image (F1)    │      5
└─────────────────────────────────┘
                │
                ▼
┌─────────────────────────────────┐
│  Base layer for (F2) and improvement layer │
│              for (F1)           │      6
└─────────────────────────────────┘
```

**FIG.1**

**FIG.9**

L$_{F1}$

L$_W$

11

H$_{F1}$

H$_W$

12

L$_{F2}$

H$_{F2}$

oversampling

13

## FIG 2

| 16x16 | 16x8 | 8x16 | 8x8 |
|-------|------|------|-----|

16x16: mode0 MV0

16x8: mode0 MV0 / mode1 MV1

8x16: mode0 MV0 | mode1 MV1

8x8: mode0 | mode1 / mode2 | mode3

8x8: MV0

8x4: MV0 / MV1

4x8: MV0 | MV1

4x4: MV0 | MV1 / MV2 | MV3

## FIG 3

31

32

**FIG 4**

Low-resolution
MB1

Low-
resolution
MB2

High-resolution
MB4

Low-resolution
MB3

Low-resolution
MB4

**FIG 5**

subdivision of the HR image into HR macroblocks — 51

division of an HR macroblock into HR blocks — 52

determination of the coding mode MC and motion vector MV by HR block — 53

construction of the HR macroblock predicted from each of the HR blocks predicted from the HR macroblock — 54

## FIG 6

number N of zoomed BR blocks covering an HR block — 61

N=0 — 62

no

yes

Inter-layer mode not taken into account — 63

N=1 — 64

no

yes

MC and MV of the HR block = MC and MV of the zoomed BR block covering a majority of pixels of the HR block — 66

MC and MV of the HR block = MC and MV of the zoomed BR block — 65

## FIG 7

FIG 8

$w_{enh}$

$w_{extract}$

$(x_{orig}, y_{orig})$

$h_{extract}$

102

subsampling

$h_{base}$

101

$w_{base}$

**FIG.10**

112

111

**FIG. 11**

**FIG. 12**

**FIG. 13**

**FIG.14**

**FIG.15**

**FIG 16**

(a)   (b)   (c)

173   171

**FIG. 17**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KEN TURKOWSKI.** Filters for common resampling tasks. *Apple Computer,* April 1990